(19) Europäisches Patentamt
European Patent Office
Office européen des brevets

(11) EP 2 289 753 B1

(12) EUROPEAN PATENT SPECIFICATION

(45) Date of publication and mention
of the grant of the patent:
**13.02.2013 Bulletin 2013/07**

(51) Int Cl.:
***B60W 30/04*** *(2006.01)*

(21) Application number: **09169029.7**

(22) Date of filing: **31.08.2009**

(54) **Method and control device for detecting and/or plausibilizing an airborne situation of a vehicle**

Verfahren und Steuerungsvorrichtung zum Erkennen und/oder Plausibilisierung einer Fahrzeugluftsituation

Procédé et dispositif de contrôle pour la détection et/ou la plausibilité d'une situation aéroportée d'un véhicule

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**02.03.2011 Bulletin 2011/09**

(73) Proprietors:
• **Robert Bosch GmbH**
  **70442 Stuttgart (DE)**
• **Volvo Car Corporation**
  **405 31 Göteborg (SE)**

(72) Inventors:
• **Rauh, Christian**
  **81377, Muenchen (DE)**
• **Becker, Jens**
  **70597, Stuttgart (DE)**
• **Lich, Thomas**
  **71409, Schwaikheim (DE)**
• **Moldenhauer, Maike**
  **71111, Waldenbuch (DE)**

• **Wogel, Anders**
  **42470, Olofstorp (SE)**
• **Doerr, Alfons**
  **70597, Stuttgart (DE)**
• **Axelsson, Anders**
  **42341, Torslanda (SE)**
• **Nilsson, Paer**
  **41671, Goeteborg (SE)**
• **Harda, Peter**
  **41324, Goeteborg (SE)**
• **Rittler, Stephan**
  **73660, Urbach (DE)**
• **Hiemer, Marcus**
  **88074, Kehlen (DE)**

(74) Representative: **Bee, Joachim**
  **Robert Bosch GmbH**
  **Zentalabteilung Patente**
  **Postfach 30 02 20**
  **70442 Stuttgart (DE)**

(56) References cited:
**EP-A- 1 002 709      DE-A1- 10 235 567**
**US-A1- 2005 080 544      US-A1- 2007 276 566**

## Description

Prior art

The present invention relates to a method according to claim 1, a control device according to claim 7 as well as a computer program product according to claim 8.

Present airbag trigger systems are focused on the detection of classic vehicle crashes such as front, side or rear crashes as well as rollover situations, as these systems are to effect a triggering of safety means for crashes as standardized by legal requirements, consumer protection initiatives or insurance companies. The field of "real world safety", that is the protection of passengers in the major field situations, has increasingly become the focal point of interest in the airbag triggering. To this end, methods for the improvement of passenger protection in these situations will be developed. They include, among other things, a detection of the driving condition. In this context, an important situation is the airborne situation. In such a situation, the driver has no chance of influencing the effects of the landing during the airborne situation, as both braking and steering will remain without effect. The severity of the landing and associated injuries therefore solely depend on physical laws and ambient conditions. Therefore, it is required to initiate necessary measures of the passive restraint system prior to the landing or provide optimum triggering in the landing.

DE 10 2007 017 691 A1 discloses a method and an apparatus for avoiding a tilt tendency of a vehicle. Here, a lift-off of a wheel of a vehicle, for example in a cornering, is detected by means of detection means, and the tilt tendency of the vehicle may be reduced and/or prevented as of the very beginning by a subsequent application of force to at least one other wheel.

DE 197 36 328 A 1 describes means and a method for the control of accident protection trigger means in vehicles, wherein a transverse acceleration of the vehicle may be ascertained by, among other things, an evaluation of ascertained wheel speeds. A bank angle of the vehicle ascertained therefrom may then provide information on whether or not accident protection trigger means of the vehicle are to be actuated.

The patent specifications cited have in common that an ascertaining and/or influencing of wheel speeds of a vehicle is used for correcting or preventing a tilt or rollover situation of the vehicle. However, with the methods and apparatuses stated in the prior art, neither a detection of an airborne situation nor a plausibilization of a detection of an airborne situation of the vehicle may be effected, which is, however, exactly what is desired.

DE 1023 5567 discloses an apparatus for detecting a rollover event, which includes at least one acceleration sensor in the vertical direction of the vehicle and one acceleration sensor in the horizontal direction of the vehicle. A processor of the apparatus according to the invention will start a rollover algorithm in response to an inertial event, in order, as a function of the signal of the acceleration sensor in the vertical direction to detect the rollover event and as a function of it to trip restraint devices.

US 2007/0276566 discloses a device for determining a tendency to tilt about the longitudinal axis and a tendency to turn about the vertical axis of a vehicle. The detection system is characterized by a lateral acceleration sensor producing a lateral acceleration signal, a yaw rate sensor producing a yaw rate signal, a steering angle sensor producing a steering angle signal, wheel speed sensors producing the rotation signals of the wheels, and which includes a controller which, in response to the steering angle, the steering velocity and the vehicle speed, determines a tendency to tilt about the longitudinal axis of a vehicle and which, in response to the lateral acceleration sensor, the yaw rate sensor, the steering angle sensor and the wheel speed sensors determines the tendency to turn about the vertical axis of the vehicle, and with the controller generating a triggering signal for at least one passenger protection means depending on the extent of these tendencies.

Disclosure of the invention

On this background, the present invention serves to present a method for detecting an airborne situation of a vehicle, a further method for detecting an airborne situation of a vehicle, a plausibilization method for plausibilizing the detecting of an airborne situation of a vehicle, furthermore a control device employing these methods as well as finally a respective computer program product according to the independent claims. Advantageous embodiments result from the respective dependent claims and the subsequent description.

The present invention provides a method for detecting an airborne situation of a vehicle, the method comprising: receiving an acceleration signal representing a substantially vertical acceleration of the vehicle; and checking whether the acceleration signal exceeds a predetermined acceleration threshold value and detecting the airborne situation of the vehicle when the acceleration signal exceeds the predetermined acceleration threshold value.

An airborne situation of a vehicle is interpreted as the vehicle being in a free fall. The substantially vertical acceleration of the vehicle denotes an acceleration occurring substantially at right angles relative to the earth's surface.

Finally, the present invention provides a control device configured to perform or implement the steps of one of the inventive methods. These embodiments of the invention in the form of a control device may also serve to achieve the object underlying the invention in a fast and efficient manner.

At hand, a control device may be an electric device, which processes sensor signals and, in dependence thereon, outputs control signals. The control device may comprise interfaces, which may be configured in hardware and/or in software. In the case of a configuration in hardware, these interfaces may, for example, be part of a so-called system ASIC, which comprises diverse functions of the control device. However, it is also possible that the interfaces be individual, integrated circuits or at least partially consist of discrete components. In the case of a configuration in software, the interfaces may be software modules, which may be provided on a microcontroller next to other software modules, for example.

What is also advantageous is a computer program product with a program code stored on a machine-readable carrier such as a semiconductor memory, a hard disk or an optical memory and utilized for performing and/or controlling the steps of the method according to any one of the aforementioned embodiments, when the program is executed on a control device or a data processing system.

The invention is based on the finding that an airborne situation of a vehicle may be ascertained via a vertical acceleration of the vehicle. For example, if same is in a defined tolerance range around 1g (e.g. ranging from 0.8 g to 1.2 g), one may assume that the vehicle is in the air. In this case, this information could be provided to restraint means of the vehicle in order to enable a fast plausibilization of e.g. a trigger decision for a belt pretensioner or to increase the robustness of the airbag triggering in potential off road situations, for example.

The present invention offers the benefit that a fast detection of the airborne situation is made possible by immediate evaluation of the substantially vertical acceleration. By virtue of the fast detection of the plummeting of the vehicle, there is, on the one hand, given the possibility of a fast physically based triggering or a plausibilization of a triggering of the belt pretensioner or the curtain airbag or window airbag and/or the side airbags.

On the other hand, increasing the robustness of a triggering of the front and side airbags in off road situations may be effected. Furthermore, for a cost effective plausibilization of airborne situations, the wheel speeds of the wheels on the vehicle may be used instead of e.g. a further redundant $a_z$ sensor (i.e. an acceleration sensor for the measurement of accelerations in the vertical z direction). This information may be made available to various units via the CAN bus in the vehicle, for example. The exact functionality of the plausibilization function will be discussed in further detail in the course of this description.

Advantageously, in the step of checking, a predetermined acceleration threshold value may be used, which is within a predefined tolerance range around a value of an acceleration of gravity. This offers the benefit of a certain measuring tolerance in the sense that a free fall of the vehicle may be detected even in the case of a value of the received acceleration signal lying just under or over the acceleration of gravity of 1g. This may be necessary due to a sensor offset or sensor tolerances.

In the present invention, a degree of an accident severity to be expected or a safety relevant airborne situation may be detected in the above method for detecting an airborne situation, the method further comprising: starting a counter when the acceleration signal exceeds the predetermined acceleration threshold value; and comparing a counter reading of the counter to a predetermined counter reading threshold value in order to detect a degree of an accident severity of the vehicle to be expected or of a safety relevant airborne situation of the vehicle when the counter reading is larger than the predetermined counter reading threshold value.

Here, the degree of the accident severity to be expected or of the safety relevant airborne situation describes the level of a risk of injury to passengers in the landing of the vehicle after the free fall. This further embodiment offers the advantage that the degree of the accident severity to be expected or of the safety relevant airborne situation may be determined in a simple and unambiguous manner even during the time of the free fall. This is given by the fact that the counter reading threshold value determines that point in time during the free fall as of which a subsequent impact of the vehicle may entail a substantial risk of injury to the passengers in the vehicle. Such a counter is easily and cost effectively implemented and is little interference prone in use.

Furthermore, in the step of comparing, at least a second predetermined counter reading threshold value may be provided in order to detect at least a second degree of an accident severity of the vehicle to be expected or of a safety relevant airborne situation of the vehicle when the counter reading is larger than the second predetermined counter reading threshold value, the second degree representing a higher accident severity or a more safety relevant airborne situation than the first degree. The advantage of a provision of several counter reading threshold values and therefore several degrees of an accident severity or a safety relevant airborne situation is that, based on the different degrees, it may be more precisely detected which measures to take at which point in time in order to guarantee optimum protection of the passengers. Thus, the different measures may be effected consecutively, for example.

Furthermore, a step of supplying a control signal may advantageously be provided, wherein, in the step of supplying, the control signal is selected based on the detected airborne situation and/or the detected degree and/or the detected second degree of the accident severity of the vehicle to be expected or of the safety relevant airborne situation of the vehicle, in order to control at least one out of a plurality of passenger protection devices of the vehicle. This offers the benefit of enabling, in a simple manner, a triggering of various passenger protection devices which are the most appropriate protection devices for the respective degree of severity of the impact to be expected. Possible passenger protection devices may be a belt pretensioner or a front airbag, for example.

Furthermore, in the step of supplying, the control signal may be selected such that it effects, in a trigger unit, a changing of a trigger threshold for triggering one of the passenger protection devices and/or the control signal may be selected such that it effects a plausibilization of a trigger decision for a passenger protection device. Advantageously, this may serve to effect e.g. a raising of a trigger threshold when it was recognized, by means of other vehicle parameters, that an off road situation with non-safety-critical airborne phases is present. In such a situation, this may serve to prevent an unintentional triggering of the front airbag, for example. Equally, in the opposite case, a respective selection of the control signal may bring about the advantage of a specifically rapid plausibilization of a triggering of a passenger protection device so that a protective effect for the passenger(s) may be provided at an early stage prior to the impact, e.g. by means of a belt pretensioner.

In the following, the invention is exemplarily discussed in further detail by means of the accompanying drawings, in which:

Fig. 1    shows a flow chart of an embodiment of the present invention in the form of a method;

Fig. 2    shows a schematic representation of an airborne situation of a vehicle;

Fig. 3    shows a schematic representation of a further airborne situation of a ve- hicle;

Fig. 4    shows representations of a vertical acceleration of a vehicle and of an exemplary characteristic curve of a counter according to an embodiment of the present invention, represented in coordinate systems and plotted against the time;

Fig. 5    shows a flow chart of a further embodiment of the present invention in the form of a method;

Fig. 6    shows a comparison of an airborne situation of a vehicle characterized by a low accident severity and an airborne situation of a vehicle charac- terized by an increased accident severity, with the addition of a plausibi- lization function for the verification of an increased accident severity, ac- cording to an embodiment of the present invention; and

Fig. 7    shows a functional concept and a flow chart of a functional implementa- tion of a method for plausibilizing the detecting of an airborne situation of a vehicle according to an embodiment of the present invention.

In the figures below, like or similar elements may be provided with like or similar reference numbers, with a repeated description being dispensed with. In addition, the figures of the drawings, the description thereof as well as the claims include numerous features in combination. A person skilled in the art clearly understands that these features may also be regarded individually or that they may be combined to form further combinations that are not explicitly described herein. Furthermore, the invention may in the following description be discussed using different measures and dimensions, whereby stating these measures and dimensions is not to be understood such that the invention is to be understood as limited to these measures and dimensions. In the subsequent description, the invention is also described by means of an embodiment in the form of a method. In this respect, it is to be noted that the method steps stated in this embodiment may also be executed in a different order. In addition, individual method steps of the embodiment described here may be omitted or modified in alternative versions of the invention. It is thus to be understood that the invention presented in this application is not exclusively limited to the subsequently described sequence of method steps.

If an embodiment comprises an "and/or" operation between a first feature and a second feature, this may be interpreted such that the embodiment may, in one form, comprise both the first feature and the second feature and, in a further form, comprise either the first feature only or the second feature only.

The so-called airborne situation is an important and comparatively simple crash situation to detect. In this airborne situation, the vehicle is in a force free state.

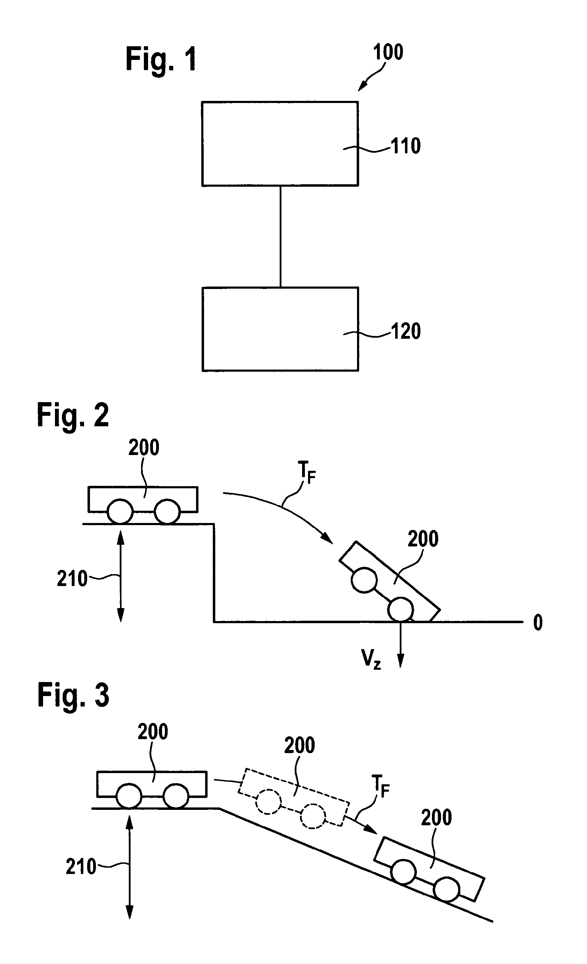

Fig. 1 shows a flow chart of an embodiment of a method 100 for detecting an airborne situation of a vehicle according to an embodiment of the present invention. In a first step of receiving 110, an acceleration signal representing a substantially vertical acceleration of the vehicle is received. The acceleration signal received is, in a further step of checking 120, checked as to whether it exceeds a predetermined acceleration threshold value, whereupon the airborne situation of the vehicle is detected when the acceleration signal exceeds the predetermined acceleration threshold value.

Fig. 2 schematically represents an airborne situation of a vehicle. A vehicle 200 is shown prior to and at the end of an airborne situation. Prior to the airborne situation occurring, the vehicle 200 is on elevated ground exhibiting a height a 210 relative to a location 0 of impact after the fall. The elevated ground may be a slope or a dune, for example. An airborne situation of the vehicle 200 is characterized by a free fall of the vehicle 200 from the height 210 of the elevated ground to the height 0 of the ground at the bottom. Here, the transition from the elevated ground to the bottom is represented abruptly, that is, it is assumed to be substantially at right angles relative to the Earth's surface. A duration of the free fall is designated with $T_F$. At the end of the airborne situation, the front of the vehicle 200 hits the ground at the bottom at a maximum speed $v_z$. Fig. 2 shows an airborne situation characterized by an increased accident severity and a substantial risk of injury for the passenger(s), as a significant deformation of the vehicle 200 entailing possible injuries of the passenger is to be expected in the impact of the vehicle 200 at the height 0.

In this context, the law of the conservation of energy is of importance. Same states that, in a closed system, the total energy will remain constant but may be converted from one form of energy to another.

Applied to the above described situation, the law of the conservation of energy, expressed in equations (1) and (2), is as follows:

$$m\,g\,h = 0{,}5\,m\,v_z{}^2 \qquad (1)$$

$$v_z = \sqrt{2\,g\,h} \qquad (2),$$

wherein, referring to the above case, the following applies:

m = mass of the vehicle
g = acceleration of gravity
h = height 210
$v_z$ = speed along the z axis

In contrast to Fig.2, Fig. 3 shows an airborne situation of the vehicle 200 characterized by a low accident severity. However, in Fig. 3, in contrast to Fig. 2, the transition from the elevated ground to the ground at the bottom is represented considerably smoother. For emphasizing the low accident severity in the airborne situation of Fig. 3, the vehicle 200 is shown in an additional airborne position, represented in dashed lines, between its positions at the beginning and the end of the airborne situation. The airborne position of the vehicle 200 in dashed lines shows that, here, the distance of the vehicle 200 from the ground is substantially shorter than in Fig. 2. Apart from that, the vehicle maintains a substantially parallel orientation relative to the ground both in the airborne phase and in the landing, as opposed to Fig. 2.

One aspect of the inventive approach consists in the fact that the airborne situation of the vehicle 200 is detected via the vertical acceleration, as it is apparent from Fig. 2. As soon as this state has been identified, a counter may be started, for example. From the counter reading exceeding one or more threshold values, conclusions regarding the severity of the subsequent impact may be drawn, as this may serve to estimate the airborne time directly or at least indirectly. Using the formulas mentioned, for example, the speed of the vehicle at the impact, which provides an indication of the accident severity to be expected, may be determined from this airborne time.

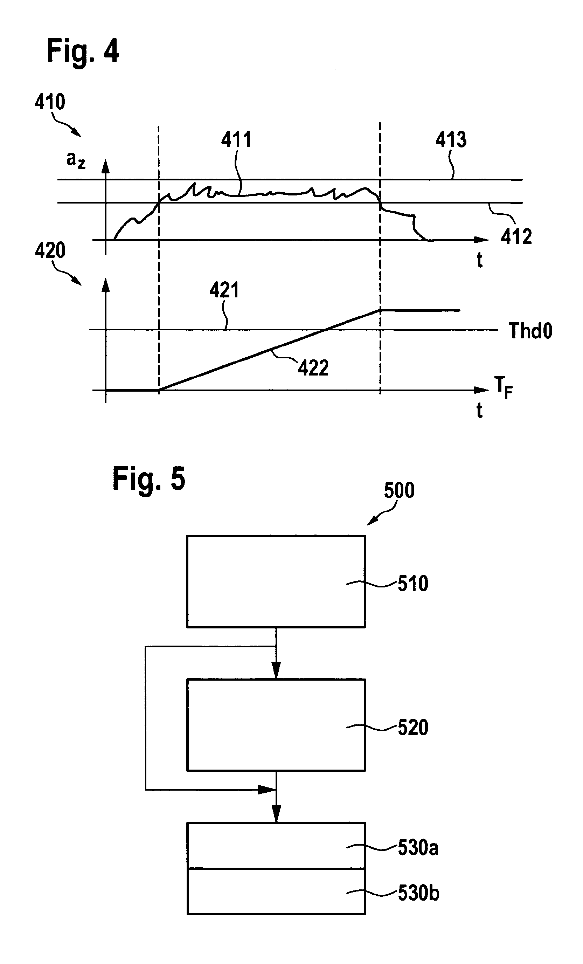

Fig. 4 shows, in an upper sub diagram, a vertical acceleration of a vehicle and, in a lower sub diagram, an exemplary characteristic curve of a counter according to an embodiment of the present invention, by means of coordinate systems, wherein the quantities stated are plotted against the time.

In a first coordinate system 410 of the upper sub diagram, the time t is plotted on the abscissa. On the ordinate, there is plotted a vertical acceleration $a_z$ of the vehicle 200 along the z axis, which is oriented substantially at right angles to the vehicle 200. A signal waveform 411 describes a course of the vertical acceleration $a_z$ of the vehicle 200 throughout the duration of a free fall. Two lines 412 and 413 running in parallel to the abscissa limit a range of acceleration values around the value of the acceleration of gravity of 1 g, so that is these lines 412 and 413 e.g. denote a tolerance range of 0.8g to 1.2g around the value of the acceleration of gravity of 1 g, for example. The value of 1 g or the acceleration values lying in the range stated form the threshold value(s), which, when exceeded by the signal waveform 411, will enable detection of an airborne situation of the vehicle 200. Therefore, Fig. 4 shows that an airborne situation of the vehicle 200 is detected at the exact point in time at which the signal waveform 411 exceeds the line 412.

In a second coordinate system 420 of the lower sub diagram of Fig. 4, again the time t is plotted on the abscissa. Values of a counter reading are plotted on the ordinate. At the level of a counter reading representing a threshold value Thd0 for an accident severity or safety relevant airborne situation of the vehicle to be expected, a line 421, which represents this acceleration threshold value Thd0, is illustrated in parallel to the abscissa. A graph 422 represents an airborne time $T_F$ as a function of the time t and the increments of the counter reading values. An intersection of the line 421 and the graph 422 identifies a point in time, at which a detecting of the accident severity or safety relevant airborne situation of vehicle 200 to be expected is effected.

The two coordinate systems 410,420 of Fig. 4 are arranged on top of each other such that it is apparent that the gradient of the graph 422 in the coordinate system 420 begins with the signal waveform 411 exceeding the line 412 and ends with the signal waveform 411 falling below the line 412. The points of exceeding and falling below and/or of the beginning and the end of the gradient of the graph 422 are characterized by two dashed lines running in parallel to the ordinate. The falling of the acceleration signal 411 below the line 412 represents the impact of the vehicle 200 on the ground.

The measurement of the airborne time of the vehicle 200 by means of a counter is made clear by the following equation (3) and its conversion (4):

$$0{,}5\,g\,t^2 = h \qquad (3)$$

$$t = \sqrt{2\frac{h}{g}} \qquad (4)$$

As already explained above, a rotational speed of the wheels on the vehicle may also be used for a cost effective detection and/or plausibilization of an airborne situation of the vehicle.

For the explanation of this function, again reference is made to the representations in the Figs. 2 and 3. According to this further approach, an airborne situation of the vehicle 200 may first be detected in the fact that a difference of the rotational speeds of the front axle and the rear axle of the vehicle 200 is small compared to a threshold. Such a situation specifically applies when a rotational speed of a wheel of the front axle, $\sigma_{max,1}$, and a rotational speed of a wheel of the rear axle, $\sigma_{max,2}$, do not exceed a given threshold Thd1. It goes without saying that $\sigma_{max,1}$ may also represent the rotational speed of a wheel of the rear axle, and $\sigma_{max,2}$ may also represent the rotational speed of a wheel of the front axle. Defining $\sigma$ as the variable for the rotational speed, the following applies:

$$\sigma_{max,1} < Thd1$$

$$\sigma_{max,2} < Thd1,$$

The low accident severity of the airborne situation of Fig. 3 is deducible from a small difference $\Delta\sigma_{1,2}$ of the rotational speeds of the front axle and the rear axle. Therefore, the following is true:

$$\Delta\sigma_{1,2} < Thd2$$

This results from the fact that, in a non-safety-critical airborne situation, it may be assumed that the wheels of both axles will touch the ground almost simultaneously so that there will not be any major differences in the rotational speeds. However, if the vehicle plummets over a longer distance, as represented in figure 2, the wheels of the first axle will first touch the ground and be stopped or accelerated, and after that, the wheels of the second axle will touch the ground and be stopped or accelerated. This yields different rotational speeds of the wheels of the individual axles, which may be evaluated for the detection of the airborne situation.

Such a situation may also serve to detect a beginning of an airborne situation, as driven wheels will start to rotate very fast immediately on losing contact with the ground, and non-driven wheels will, in the airborne situation, have a speed slowly decreasing from the original speed present while the wheels were in contact with the ground, the reason for this being the missing "drive on ground". In this manner, the detection of the difference of the rotational speeds of the wheels of two different axles (especially of a driven axle and a non-driven axle) may serve to detect the airborne situation.

Fig. 5 shows a flow chart of an embodiment of a method 500 for detecting an airborne situation of a vehicle according to an embodiment of the present invention, wherein rotational speeds of the wheels of the vehicle 200 are used for the detection of the airborne situation.

In a first step of receiving 510, a first rotational speed signal, $\sigma_{max,1}$, $\sigma_{max,2}$, which represents a rotational speed of a wheel of a first axle, and a second rotational speed signal, $\sigma_{max,1}$, $\sigma_{max,2}$, which represents a rotational speed of a wheel of a second axle, are received. In a second step of comparing 520, the first rotational speed signal $\sigma_{max,1}$, $\sigma_{max,2}$ and the second rotational speed signal $\sigma_{max,1}$, $\sigma_{max,2}$ are compared to a predetermined rotational speed signal threshold value Thd1, in order to detect an airborne situation of the vehicle 200 when the first $\sigma_{max,1}$, $\sigma_{max,2}$ and the second $\sigma_{max,1}$, $\sigma_{max,2}$ rotational speed signals are larger than the predetermined rotational speed signal threshold value Thd1. Alternatively or additionally, in a further step of forming 530a and comparing 530b, a difference $\Delta\sigma_{1,2}$ of the first $\sigma_{max,1}$, $\sigma_{max,2}$ and second $\sigma_{max,1}$, $\sigma_{max,2}$ rotational speed signals is formed, and the difference $\Delta\sigma_{1,2}$ is compared to a predetermined difference threshold value Thd2, in order to detect an airborne situation of the vehicle 200 when the difference $\Delta\sigma_{1,2}$ is larger than the predetermined difference threshold value Thd2.

The above mentioned detection of an airborne situation of the vehicle 200 by means of the rotational speeds of wheels of the vehicle 200 may also be used for the plausibilization of an airborne situation, which was previously detected by means of the acceleration signal 411. This plausibilization function is explained in greater detail in the following.

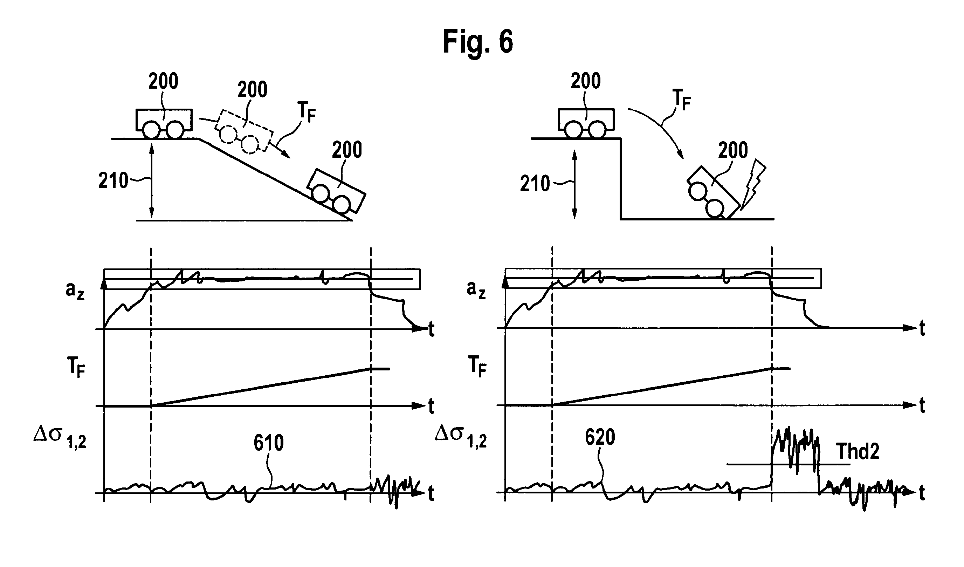

Fig. 6 shows a comparison of the airborne situation of a vehicle according to Fig. 3, which is characterized by a low accident severity, and the airborne situation of a vehicle according to Fig. 2, which is characterized by an increased accident severity. In each case, a plausibilization function for the verification of an increased accident severity is added.

In Fig. 6, in a first part of the comparison, the airborne situation characterized by a low accident severity of Fig. 3 is shown together with the coordinate systems of Fig. 4, which are extended by the component of the rotational speed difference $\Delta\sigma_{1,2}$ of the front axle and the rear axle, which was already described above. For reasons of clarity, the coordinate systems are represented on top of each other in the illustration so that, in the common representation, the ordinate exhibits three sections for the representation of each one of the components of the vertical acceleration $a_z$, the airborne time $T_F$

and the rotational speed difference $\Delta\sigma_{1,2}$, each section being associated to an individual abscissa, on which the time t is plotted. A difference signal 610 of the difference of the rotational speeds of the wheels on the first and second axles, which varies around the value of 0 over the time t, indicates that an airborne situation of an increased accident severity may not be plausibilized.

Furthermore, in a second part of the comparison in Fig. 6, the airborne situation characterized by an increased accident severity of Fig. 2 is also shown together with the coordinate systems of Fig. 4. Here too, the coordinate systems are represented together in the form as described above and extended by the component of the rotational speed difference $\Delta\sigma_{1,2}$. In contrast to the first part of the comparison, here, a difference signal 620 for the rotational speed difference $\Delta\sigma_{1,2}$, which is measured over the time t, exceeds the threshold Thd2 for a certain period of time. From these abruptly occurring large values for the rotational speed difference $\Delta\sigma_{1,2}$, it may be detected that the front axle of the vehicle 200 was already decelerated as a result of the impact on the ground, while the rear axle of the vehicle 200 is still in the air. Thus, in this case, the airborne situation of an increased accident severity is plausibilized.

Thus, Fig. 6 shows that, although an airborne situation is detected in both situations, only the situation illustrated on the right will enable the detection of a safety relevant airborne situation or result in an active intervention in the trigger behavior of the total algorithm.

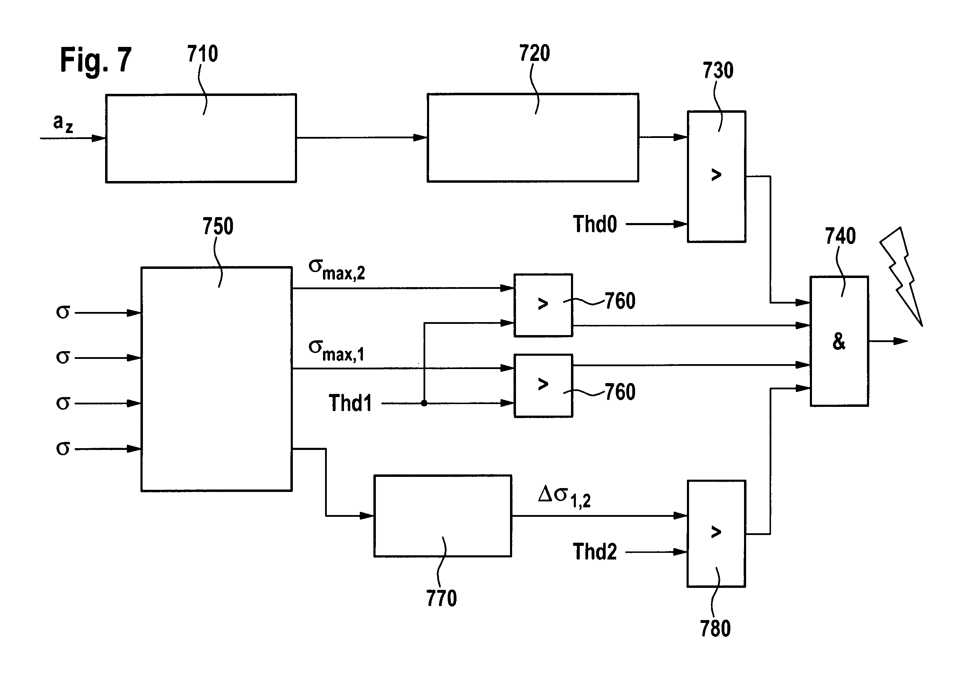

Finally, Fig. 7 shows a functional concept and flow chart of a functional implementation of the above physical approach to the detection and plausibilization of an airborne situation by means of an embodiment of the present invention in the form of a plausibilization method.

In a first routine of a plausibilization method 700 according to an embodiment of the invention, in a step 710, after receiving an acceleration value $a_z$ for the vertical acceleration, there is effected a check whether or not the received value of $a_z$ lies in the defined band (i.e. in the tolerance range) around 1g. If the value lies within the defined band, an airborne time encoder and/or counter is incremented in a further step 720. In a subsequent step 730, the result value of the incrementing is compared to the threshold value Thd0 for an accident severity or safety relevant airborne situation of the vehicle to be expected. If the comparison shows that the threshold value Thd0 is exceeded, then, in a subsequent step 740, a respective input of e.g. an AND gate for a decision for or against a triggering of one or multiple passenger protection devices is set to logic "1", wherein, for plausibilizing the detected comparison result, the AND gate may e.g. comprise at least one further input.

In a second routine of the inventive method 700, steps 750 and 760 are effected (e.g. in parallel to the steps 710, 720, 730), wherein, in the step 750, four wheel speeds $\sigma$ of wheels of the vehicle are subjected to a variance calculation, and, in the step 760, a maximum rotational speed $\sigma_{max,2}$ for one of the wheels of the rear axle of the vehicle and a maximum rotational speed $\sigma_{max,1}$ for one of the wheels of the front axle of the vehicle are compared to a threshold value Thd1 for a maximum rotational speed. If the comparison shows that the threshold value Thd1 is not exceeded, then again step 740 is effected, in which a further respective input of the AND gate for the decision for or against a triggering of one or multiple passenger protection devices is set to logic "1". Furthermore, in the inventive method 700, the step 750 may in addition to the step 760 be followed by a step 770, which represents ascertaining a difference $\Delta\sigma_{1,2}$ between the rotational speed of one wheel of the front axle and the rotational speed of one wheel of the rear axle. A result of this ascertaining of a difference $\Delta\sigma_{1,2}$ is, in a subsequent step 780, subjected to a comparison to a threshold value Thd2 for a maximum rotational speed difference. If the comparison shows that the threshold value Thd2 is exceeded, again a jump back to step 740 is made, in which a further respective input of the AND gate for the decision for or against the triggering of one or multiple passenger protection devices is set to logic "1".

The embodiment of the inventive method shown in Fig. 7 ends with a triggering of one or multiple passenger protection devices when all inputs of the AND gate are set to 1. Summing up, it may be stated that the steps 710, 720, 730 of Fig. 7 serve for the detection of an accident severity of an airborne situation, while the steps 750 and 760, and alternatively or additionally the steps 770 and 780, serve for the plausibilization of the detection of the accident severity. If at least one of the comparison steps 760, 780 has the result that the respective threshold value Thd1 and/or Thd2 is not exceeded, no triggering of a passenger protection device will be effected as not all of the inputs of the AND gate are set to logic "1 ".

**Claims**

1. Method (100) for detecting an airborne situation of a vehicle (200), the method (100) comprising:

   receiving (110) an acceleration signal (411) representing a substantially vertical acceleration of the vehicle (200); and
   checking (120) whether the acceleration signal (411) exceeds a predetermined acceleration threshold value (412) and detecting the airborne situation of the vehicle (200) when the acceleration signal (411) exceeds the predetermined acceleration threshold value (412), wherein a degree of an accident severity to be expected or a safety relevant airborne situation is detected, by the steps of:

      starting (720) a counter when the acceleration signal (411) exceeds the predetermined acceleration threshold value (412); and

comparing (730) a counter reading of the counter to a predetermined counter reading threshold value (Thd0) in order to detect a degree of an accident severity of the vehicle (200) to be expected or of a safety relevant airborne situation of the vehicle (200) when the counter reading is larger than the predetermined counter reading threshold value (Thd0).

2. Method (100) according to claim 1, **characterized in that**, in the step of checking (120), the predetermined acceleration threshold value (412) is within a predefined tolerance range around a value of an acceleration of gravity.

3. Method (100) according to one of claims 1 or 2, **characterized in that**, in the step of comparing (730), at least a second predetermined counter reading threshold value is provided in order to detect at least a second degree of an accident severity of the vehicle (200) to be expected or of a safety relevant airborne situation of the vehicle (200) when the counter reading is larger than the second predetermined counter reading threshold value, the second degree representing a higher accident severity or a more safety relevant airborne situation than the first degree.

4. Plausibilization method (700) for plausibilizing a detecting of an airborne situation of a vehicle (200), **characterized in that** an airborne situation of the vehicle (200) is detected by effecting the steps of the method (100) according to any one of claims 1 to 3, wherein a detected airborne situation is plausibilized by effecting the steps of:

receiving (510) a first rotational speed signal ($\sigma_{max,1}$, $\sigma_{max,2}$) representing a rotational speed of a wheel of a first axle, and receiving (510) a second rotational speed signal ($\sigma_{max,1}$, $\sigma_{max,2}$) representing a rotational speed of a wheel of a second axle;

comparing (520) the first rotational speed signal ($\sigma_{max,1}$, $\sigma_{max,2}$) to a predetermined rotational speed signal threshold value (Thd1) and the second rotational speed signal ($\sigma_{max,1}$, $\sigma_{max,2}$) to the predetermined rotational speed signal threshold value (Thd1) in order to detect an airborne situation of the vehicle (200) when the first ($\sigma_{max,1}$, $\sigma_{max,2}$) and the second ($\sigma_{max,1}$, $\sigma_{max,2}$) rotational speed signals are lower than the predetermined rotational speed signal threshold value (Thd1); and/or

forming (530a) a difference ($\Delta\sigma_{1,2}$) of the first ($\sigma_{max,1}$, $\sigma_{max,2}$) and second ($\sigma_{max,1}$, $\sigma_{max,2}$) rotational speed signals and comparing (530b) the difference ($\Delta\sigma_{1,2}$) to a predetermined difference threshold value (Thd2), in order to detect an airborne situation of the vehicle (200) when the difference ($\Delta\sigma_{1,2}$) is larger than the predetermined difference threshold value (Thd2).

5. Method according to any one of claims 1 to 4, **characterized in that** further, a step of supplying a control signal is provided, wherein, in the step of supplying, the control signal is selected based on the detected airborne situation and/or the detected degree and/or the detected second degree of the accident severity of the vehicle (200) to be expected or of the safety relevant airborne situation of the vehicle (200), in order to control at least one out of a plurality of passenger protection devices of the vehicle(200).

6. Method according to claim 5, **characterized in that**, in the step of supplying, the control signal is selected such that it effects, in a trigger unit, at changing of a trigger threshold for triggering one of the passenger protection devices and/or the control signal is selected such that it effects a plausibilization of a trigger decision for a passenger protection device.

7. Control device having units which are configured to perform the steps of a method (100) according to any one of claims 1 to 6.

8. Computer program product with a program code stored on a machine readable carrier, for performing the steps of the method (100) according to any one of claims 1 to 6, when the program is executed on a control device.

**Patentansprüche**

1. Verfahren (100) zum Detektieren einer Freiflugsituation eines Fahrzeugs (200), wobei das Verfahren (100) Folgendes umfasst:

Empfangen (110) eines Beschleunigungssignals (411), das eine im Wesentlichen vertikale Beschleunigung des Fahrzeugs (200) repräsentiert; und

Prüfen (120), ob das Beschleunigungssignal (411) einen vorbestimmten Beschleunigungsschwellenwert (412) übersteigt, und Detektieren der Freiflugsituation des Fahrzeugs (200), wenn das Beschleunigungssignal (411) den vorbestimmten Beschleunigungsschellenwert (412) übersteigt, wobei ein Grad einer zu erwartenden Unfallschwere oder einer sicherheitsrelevanten Freiflugsituation durch die folgenden Schritte detektiert wird:

Starten (720) eines Zählers, wenn das Beschleunigungssignal (411) den vorbestimmten Beschleunigungsschwellenwert (412) übersteigt; und

Vergleichen (730) eines Zählerstandes des Zählers mit einem vorbestimmten Zählerstandschwellenwert (Thd0), um einen Grad einer zu erwartenden Unfallschwere des Fahrzeugs (200) oder einer sicherheitsrelevanten Freiflugsituation des Fahrzeugs (200) zu detektieren, wenn der Zählerstand größer als der vorbestimmte Zählerstandschwellenwert (Thd0) ist.

2. Verfahren (100) nach Anspruch 1, **dadurch gekennzeichnet, dass** in dem Schritt des Prüfens (120) der vorbestimmte Beschleunigungsschwellenwert (412) in einem vordefinierten Toleranzbereich um einen Wert einer Beschleunigung der Schwerkraft herum liegt.

3. Verfahren (100) nach einem der Ansprüche 1 oder 2, **dadurch gekennzeichnet, dass** in dem Schritt des Vergleichens (730) mindestens ein zweiter vorbestimmter Zählerstandschwellenwert bereitgestellt wird, um mindestens einen zweiten Grad einer zu erwartenden Unfallschwere des Fahrzeugs (200) oder einer sicherheitsrelevanten Freiflugsituation des Fahrzeugs (200) zu detektieren, wenn der Zählerstand größer als der zweite vorbestimmte Zählerstandschwellenwert ist, wobei der zweite Grad eine höhere Unfallschwere oder eine sicherheitsrelevantere Freiflugsituation als der erste Grad repräsentiert.

4. Plausibilisierungsverfahren (700) zum Plausibilisieren einer Detektion einer Freiflugsituation eines Fahrzeugs (200), **dadurch gekennzeichnet, dass** die Freiflugsituation des Fahrzeugs (200) durch Bewirken der Schritte des Verfahrens (100) nach einem der Ansprüche 1 bis 3 detektiert wird, wobei eine detektierte Freiflugsituation durch die Durchführung der folgenden Schritte plausibilisiert wird:

Empfangen (510) eines ersten Drehgeschwindigkeitssignals ($\sigma_{max1}$, $\sigma_{max2}$), das eine Drehgeschwindigkeit eines Rads einer ersten Achse repräsentiert, und Empfangen (510) eines zweiten Drehgeschwindigkeitssignals ($\sigma_{max1}$, $\sigma_{max2}$), das eine Drehgeschwindigkeit eines Rads einer zweiten Achse repräsentiert; Vergleichen (520) des ersten Drehgeschwindigkeitssignals ($\sigma_{max1}$, $\sigma_{max2}$) mit einem vorbestimmten Drehgeschwindigkeitssignal-Schwellenwert (Thd1) und des zweiten Drehgeschwindigkeitssignals ($\sigma_{max1}$, $\sigma_{max2}$) mit dem vorbestimmten Drehgeschwindigkeitssignal-Schwellenwert (Thd1), um eine Freiflugsituation des Fahrzeugs (200) zu detektieren, wenn das erste ($\sigma_{max1}$, $\sigma_{max2}$) und das zweite ($\sigma_{max1}$, $\sigma_{max2}$) Drehgeschwindigkeitssignal kleiner als der vorbestimmte Drehgeschwindigkeitssignal-Schwellenwert (Thd1) sind; und/oder Bilden (530a) einer Differenz ($\Delta\sigma_{1,2}$) des ersten ($\sigma_{max1}$, $\sigma_{max2}$) und zweiten ($\sigma_{max1}$, $O_{max2}$) Drehgeschwindigkeitssignals und Vergleichen (530b) der Differenz ($\Delta\sigma_{1,2}$) mit einem vorbestimmten Differenzschwellenwert (Thd2), um eine Freiflugsituation des Fahrzeugs (200) zu detektieren, wenn die Differenz ($\Delta\sigma_{1,2}$) größer als der vorbestimmte Differenzschwellenwert (Thd2) ist.

5. Verfahren nach einem der Ansprüche 1 bis 4, **dadurch gekennzeichnet, dass** ferner ein Schritt des Bereitstellens eines Steuersignals bereitgestellt wird, wobei in dem Schritt des Bereitstellens das Steuersignal auf der Basis der detektierten Freiflugsituation und/oder des detektierten Grads und/oder des detektierten zweiten Grads der zu erwartenden Unfallschwere des Fahrzeugs (200) oder der sicherheitsrelevanten Freiflugsituation des Fahrzeugs (200) ausgewählt wird, um mindestens eine von mehreren Insassenschutzeinrichtungen des Fahrzeugs (200) zu steuern.

6. Verfahren nach Anspruch 5, **dadurch gekennzeichnet, dass** in dem Schritt des Bereitstellens das Steuersignal so ausgewählt wird, dass es in einer Triggereinheit die Änderung einer Triggerschwelle zum Triggern einer der Insassenschutzeinrichtungen bewirkt und/oder das Steuersignal so ausgewählt wird, dass es eine Plausibilisierung einer Triggerentscheidung für eine Insassenschutzeinrichtung bewirkt.

7. Steuereinrichtung mit Einheiten, die dafür ausgelegt sind, die Schritte eines Verfahrens (100) nach einem der Ansprüche 1 bis 6 auszuführen.

8. Computerprogrammprodukt mit einem auf einem maschinenlesbaren Träger gespeicherten Programmcode zum Ausführen der Schritte des Verfahrens (100) nach einem der Ansprüche 1 bis 6, wenn das Programm auf einer Steuereinrichtung ausgeführt wird.

**Revendications**

1. Procédé (100) pour détecter qu'un véhicule (200) n'est plus en appui sur le sol, le procédé (100) comportant les étapes qui consistent à :

recevoir (110) un signal d'accélération (411) qui représente une accélération essentiellement verticale du véhicule (200) et

vérifier (120) si le signal d'accélération (411) dépasse une valeur prédéterminée (412) de seuil d'accélération et détecter que le véhicule (200) n'est plus en appui sur le sol lorsque le signal d'accélération (411) dépasse la valeur prédéterminée (412) de seuil d'accélération,

le degré de gravité d'un accident attendu ou la sécurité de la situation de non appui sur le sol étant détectés par les étapes qui consistent à :

lancer (720) un compteur lorsque le signal d'accélération (411) dépasse la valeur prédéterminée (412) de seuil d'accélération et comparer (730) la mesure du compteur à une valeur prédéterminée (Thd0) de seuil de mesure du compteur pour détecter le degré de gravité attendu d'un accident du véhicule (200) ou la sécurité de la situation de non appui sur le sol du véhicule (200) lorsque la mesure du compteur est supérieure à la valeur prédéterminée (Thd0) de seuil de mesure du compteur.

2. Procédé (100) selon la revendication 1, **caractérisé en ce que** dans l'étape de vérification (120), la valeur prédéterminée (412) de seuil d'accélération est située dans une plage de tolérance prédéterminée autour d'une valeur de l'accélération due à la gravité.

3. Procédé (100) selon l'une des revendications 1 ou 2, **caractérisé en ce que** dans l'étape de comparaison (730), au moins une deuxième valeur prédéterminée de seuil de mesure du compteur est délivrée pour détecter au moins un deuxième degré de gravité d'un accident attendu du véhicule (200) ou la sécurité de la situation de non appui sur le sol du véhicule (200) lorsque la mesure du compteur est supérieure à la deuxième valeur prédéterminée de seuil de mesure de compteur, le deuxième degré représentant un accident de gravité plus élevée ou une plus grande sécurité de la situation de non appui sur le sol que le premier degré.

4. Procédé de plausibilisation (700) en vue de plausibiliser la détection qu'un véhicule (200) n'est plus en appui sur le sol, **caractérisé en ce que** la situation de non appui sur le sol du véhicule (200) est détectée en exécutant les étapes du procédé (100) selon l'une quelconque des revendications 1 à 3, la détection d'une situation de non appui sur le sol étant plausibilisée en exécutant les étapes qui consistent à :

recevoir (510) un premier signal ($\sigma_{max,1}$, $\sigma_{max,2}$) de vitesse de rotation représentant la vitesse de rotation d'une roue d'un premier essieu et recevoir (510) un deuxième signal ($\sigma_{max,1}$, $\sigma_{max,2}$) de vitesse de rotation représentant la vitesse de rotation d'une roue d'un deuxième essieu, comparer (520) le premier signal ($\sigma_{max,1}$, $\sigma_{max,2}$) de vitesse de rotation à une valeur prédéterminée (Thd1) de seuil de signal de vitesse de rotation et le deuxième signal ($\sigma_{max,1}$, $\sigma_{max,2}$) de vitesse de rotation à la valeur prédéterminée (Thd1) de seuil du signal de vitesse de rotation pour détecter que le véhicule (200) n'est plus en appui sur le sol lorsque le premier signal ($\sigma_{max,1}$, $\sigma_{max,2}$) de vitesse de rotation et le deuxième signal ($\sigma_{max,1}$, $\sigma_{max,2}$) de vitesse de rotation sont inférieurs à la valeur prédéterminée (Thd1) de seuil de signal de vitesse de rotation et/ou former (530a) la différence ($\Delta\sigma_{1,2}$) entre le premier signal ($\sigma_{max,1}$, $\sigma_{max,2}$) de vitesse de rotation et le deuxième signal ($\sigma_{max,1}$, $\sigma_{max,2}$) de vitesse de rotation et comparer (530b) la différence ($\Delta\sigma_{1,2}$) à une valeur prédéterminée (Thd2) de seuil de différence pour détecter que le véhicule (200) n'est plus en appui que le sol lorsque la différence ($\Delta\sigma_{1,2}$) est supérieure à la valeur prédéterminée (Thd2) de seuil de différence.

5. Procédé selon l'une quelconque des revendications 1 à 4, **caractérisé en ce qu'**il est prévu en outre une étape de fourniture d'un signal de contrôle et **en ce qu'**au cours de cette étape de fourniture, le signal de contrôle est sélectionné sur la base de la détection d'une situation de non appui sur le sol, du degré détecté et/ou du deuxième degré détecté de gravité attendue de l'accident du véhicule (200) ou de la sécurité de la situation de non appui sur le sol du véhicule (200) pour contrôler au moins l'un des différents dispositifs de protection des occupants du véhicule (200).

6. Procédé selon la revendication 5, **caractérisé en ce que** dans l'étape de fourniture, le signal de contrôle est sélectionné de telle sorte qu'il entraîne dans une unité de déclenchement la modification du seuil de déclenchement d'un des dispositifs de protection des occupants et/ou **en ce que** le signal de contrôle est sélectionné de telle sorte qu'il entraîne la plausibilisation d'une décision de déclenchement d'un dispositif de protection des occupants.

7. Dispositif de contrôle présentant des unités configurées pour exécuter les étapes d'un procédé (100) selon l'une quelconque des revendications 1 à 6.

8. Produit de programme informatique doté d'un code de programme conservé sur un support lisible par machine en vue d'exécuter les étapes du procédé (100) selon l'une quelconque des revendications 1 à 6 lorsque le programme est exécuté sur un dispositif de contrôle.

# Fig. 1

# Fig. 2

# Fig. 3

# Fig. 4

410

$a_z$

411

413

412

t

420

421

422

Thd0

$T_F$

t

# Fig. 5

500

510

520

530a

530b

Fig. 6

**Fig. 7**

710

720

730  $\vee$

Thd0

740  &

750

760  $\vee$

760  $\vee$

770

780  $\vee$

Thd1

Thd2

$\sigma_{max,2}$

$\sigma_{max,1}$

$\Delta\sigma_{1,2}$

$a_z$

$\sigma$
$\sigma$
$\sigma$
$\sigma$

**EP 2 289 753 B1**

**REFERENCES CITED IN THE DESCRIPTION**

**Patent documents cited in the description**

- DE 102007017691 A1
- DE 19736328 A1
- DE 10235567
- US 20070276566 A